# FASCICULE DE BREVET EUROPEEN

(11) **EP 2 820 873 B1**
(45) Date de publication et mention de la délivrance du brevet: **25.10.2017**
(21) Numéro de dépôt: 13706051.3
(22) Date de dépôt: 27.02.2013
(51) Int. Cl.: H04W 8/08, H04L 29/12

(54) **GESTION DE LA MOBILITÉ D'UN RESEAU MOBILE**
MOBILITÄTSMANAGEMENT EINES MOBILFUNKNETZES
MOBILITY MANAGEMENT OF A MOBILE NETWORK

(30) Priorité: 28.02.2012 FR 1251780
(43) Date de publication de la demande: 07.01.2015
(73) Titulaire: Commissariat à l'Énergie Atomique et aux Énergies Alternatives, 75015 Paris (FR)
(72) Inventeur: PETRESCU, Alexandru, F-91400 Orsay (FR); BOC, Michael, F-92140 Clamart (FR); JANNETEAU, Christophe, F-28210 Chaudon (FR)
(74) Mandataire: Lopez, Frédérique
(86) Numéro de dépôt international: PCT/EP2013/053968
(87) Numéro de publication internationale: WO 2013/127881

(56) Documents cités:
- WO-A1-2009/014318
- US-A1- 2009 225 761
- KANG-WON LEE ET AL: "Global Mobility Management Scheme with Interworking between PMIPv6 and MIPv6", NETWORKING AND COMMUNICATIONS, 2008. WIMOB '08. IEEE INTERNATIONAL CONFERENCE ON WIRELESS AND MOBILE COMPUTING, IEEE, PISCATAWAY, NJ, USA, 12 octobre 2008 (2008-10-12), pages 153-158, XP031350708, ISBN: 978-0-7695-3393-3

## Description

### Domaine de l'invention

L'invention concerne les réseaux mobiles et plus particulièrement la mobilité de tels réseaux mobiles dans un environnement Proxy Mobile Internet Protocol opérant sous le protocole Dynamic Host Configuration Protocol.

### Etat de la Technique

La mobilité Internet Protocol (Mobile Internet Protocol MIP en anglais) est un protocole de communication qui permet à un utilisateur d'un terminal indépendant ou d'un équipement utilisateur (respectivement Mobile Host MH ou User Equipment UE en anglais) de se déplacer avec la même adresse IP depuis un réseau IP origine (réseau mère ou Home Network HN en anglais) vers un autre réseau IP (réseau visité ou Foreign Network en anglais) en conservant ses connections actives.

Un réseau IP au sein duquel la mobilité des équipements est gérée par le protocole Proxy Mobile IP est appelé un domaine de mobilité proxy « Proxy Mobile IP (PMIP) en anglais ». La mobilité proxy est spécifiée par l'Internet Engineering Task Force (IETF) dans différents documents de 'Request For Comments' (RFC). En particulier, la [RFC5213] définit le protocole Proxy Mobile IP Version 6 (PMIPv6) auquel il peut être fait référence comme état de l'art actuel de la mobilité Proxy.

Le protocole « Dynamic Host Configuration Protocol ou DHCP en anglais » est largement utilisé dans les réseaux pour gérer les affectations d'adresses IP. Il permet d'utiliser des serveurs DHCP pour faire des affectations dynamiques d'adresses IP et autres aspects de configuration correspondants pour des clients DHCP d'un réseau. Dans un réseau PMIPv6, le protocole DHCP permet d'affecter des adresses IP à des équipements mobiles indépendants ou à des routeurs mobiles « Mobile Routeur ou MR en anglais ».

Une adresse IPv6 est longue de 128 bits dont la représentation commune est sur l'exemple suivant:
2001:0db8:0000:85a3:0000:0000:ac1f:8001 où 8 groupes de 2 octets sont séparés par un signe deux-points. Il est possible de rencontrer des représentations tronquées et d'omettre de 1 à 3 zéros non significatifs dans chaque groupe de 4 chiffres hexadécimaux. Ainsi, l'adresse IPv6 ci-dessus est équivalente à :
   2001:db8:0:85a3:0:0:ac1f:8001

Les réseaux sont notés en utilisant une notation où la première adresse du réseau est suivie par une barre oblique et un nombre qui indique la taille en bits du réseau. La partie commune des adresses est appelée un préfixe. Par exemple, le préfixe 2001:db8:1f89::/48 représente l'ensemble des adresses qui commence à 2001:db8:1f89:0:0:0:0:0 et finit à 2001:db8:1f89:ffff:ffff:ffff:ffff:ffff.

Bien que le protocole Proxy Mobile IPv6 gère l'attribution de préfixe pour former des adresses IPv6 pour des équipements indépendants, il ne gère pas une telle attribution pour des groupes d'équipements en communication avec un routeur mobile « Mobile Routeur ou MR en anglais ». De tels équipements sont généralement désignés comme « Local Fixed Nodes ou LFNs en anglais » et définissent une plateforme mobile ou réseau mobile. Les LFNs d'un même réseau se déplacent ensemble, de manière homogène. De tels réseaux mobiles sont par exemple constitués d'une pluralité de terminaux LFNs tels que Smartphones, ordinateur portable, ou tablette PC pour les passagers d'un bateau, d'un avion, ou d'une voiture.

Ainsi pour ces réseaux mobiles, il est nécessaire de maintenir les connections actives pour chaque équipement quand le réseau mobile se déplace. Un exemple se trouve dans xp031350708 Kang-Won Lee et al. "Global Mobility Management Scheme with Interworking between PMIPv6 and MIPv6. Un certain nombre de solutions existent permettant soit d'attribuer à un routeur mobile un ou plusieurs préfixes de réseau mobile « Mobile Network Prefix ou MNP en anglais », soit d'améliorer le support du protocole DHCPv6 dans PMIPv6. En effet, le protocole DHCPv6 possède une procédure de Délégation de Préfixe « DHCPv6-PD en anglais » définie dans la [RFC3633] qui est un protocole d'allocation de préfixe IPv6 aux routeurs IPv6.

Particulièrement, tel que cela est décrit dans le document de X. Zhou et al., « Prefix Delegation for Proxy Mobile IPv6 », Internet Draft, draft-ietf-netext-pd-pmip-01.txt, Work in Progress, NETEXT Working Group, Working Group item, 31 octobre 2011, cette procédure consiste à demander au serveur DHCP un ensemble d'adresses ou « préfixe » qui va ensuite être annoncé en mode PMIP par le routeur mobile dans son réseau mobile. L'allocation de préfixe avec un serveur DHCP implique non seulement une gestion d'un ensemble d'adresses mais aussi une gestion supplémentaire de tables de routage au niveau du serveur DHCP (DHCP Server) et des relais DHCP (DCHP Relay). De plus, il est difficile d'assurer une cohérence du préfixe alloué simultanément par deux protocoles différents (PMIPv6 et DHCPv6-PD). Le document cité ne spécifie pas de mécanisme pour cette synchronisation entre DHCP et PMIP.

Il existe ainsi le besoin d'une infrastructure Proxy Mobile IPv6 qui supporte la mobilité de réseaux mobiles opérant sous le protocole DHCP.

La présente invention répond à ce besoin.

### Résumé de l'invention

Un objet de la présente invention est de fournir une méthode pour gérer la mobilité de réseaux mobiles opérant sous le protocole DHCP à l'intérieur de domaines PMIP.
Un autre objet de la présente invention est de fournir fournir une méthode qui offre le support de la fonction de délégation de préfixes DHCPv6-PD dans un domaine PMIPv6.

Un objet plus spécifique de la présente invention est de permette une configuration dynamique des adresses de terminaux mobiles appartenant à un réseau mobile.

Un autre objet de la présente invention est de permettre à un terminal mobile à l'intérieur d'un réseau mobile d'obtenir une adresse IP globale et ainsi de communiquer avec un noeud correspondant situé à une position arbitraire dans le réseau Internet.

Un autre objet de la présente invention est d'offrir une communication stable quand un routeur mobile bascule entre deux passerelles d'accès au réseau « Mobile Access Gateway ou MAG en anglais ».

Avantageusement mais sans limitation, l'invention trouvera des applications dans des systèmes de transports (public ou privé), de sécurité et de défense, ou de télécommunications.

Pour obtenir les résultats recherchés, une méthode et un système sont proposés.

En particulier, une méthode pour gérer la mobilité d'un réseau mobile dans un environnement Proxy Mobile Internet Protocol (PMIP) opérant sous le protocole Dynamic Host Configuration Protocol (DHCP) est présentée. Le réseau mobile comprend un routeur mobile en communication avec au moins un équipement utilisateur et la méthode comprenant les étapes de :
- recevoir un message (DHCP Request) de demande de préfixe de réseau mobile (MNP/X), le message contenant un identifiant DHCP unique pour identifier le routeur mobile demandeur (DUID) ;
- attribuer une valeur d'identifiant mobile (MNID) à l'identifiant DHCP unique;
- générer un message (DHCP Relay-Forward) de demande de préfixe de réseau mobile (MNP/X), le message contenant la valeur de l'identifiant mobile (MNID) attribuée ;
- recevoir un message (DHCP Relay-Reply) de réponse contenant un préfixe de réseau mobile alloué (MNP/Y) et la valeur de l'identifiant mobile (MNID) ;
- restaurer la valeur de l'identifiant DHCP unique; et
- transmettre un message (DHCP Reply) de réponse, le message contenant l'identifiant DHCP unique du routeur mobile demandeur (DUID) et le préfixe de réseau mobile alloué (MNP/Y).

Différentes variantes d'implémentations sont décrites.

### Description des figures

Différents aspects et avantages de l'invention vont apparaitre en appui de la description d'un mode préféré d'implémentation de l'invention mais non limitatif, avec référence aux figures ci-dessous
La Figure 1 est une représentation topologique d'une architecture de réseau mobile dans laquelle implémenter préférentiellement l'invention ;
La Figure 2 est une représentation topologique des entités PMIP et DHCP intervenant dans la méthode de la présente invention;
La Figure 3 montre sous un schéma de type flot de données une procédure d'attachement d'un routeur mobile au réseau PMIP selon le principe de l'invention ;
Les Figures 4a et 4b illustrent les procédures exécutées respectivement sur les entités DSe et LMA dans une première variante d'implémentation de l'invention;
Les Figures 5a et 5b illustrent les procédures exécutées respectivement sur les entités MAG/DRe et LMA dans une seconde variante d'implémentation de l'invention.

### Description détaillée de l'invention

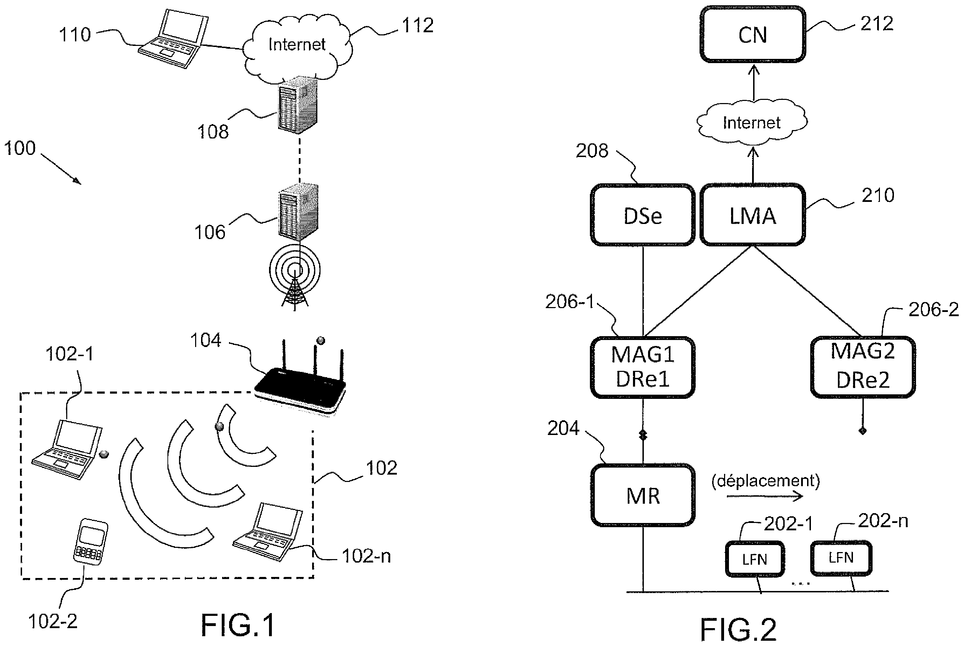

La Figure 1 illustre une architecture générale 100 de réseau mobile opérant sous le protocole DCHP pour implémenter la présente invention. Un réseau mobile (102) comprend un routeur mobile (104) et une pluralité d'équipements individuels LFNs (102-1, 102-2, 102-n). Les terminaux LFNs sont en communication avec le routeur mobile (104), préférentiellement selon un mode de connexion sans-fil (wireless). Les terminaux peuvent être tout équipement portable comme des ordinateurs portables, des notebooks, des smartphones ou Personal Digital Assistant (PDA).

Le routeur mobile (104) est aussi un routeur demandeur « Requesting Router ou RR en anglais » qui envoie des requêtes de demande d'adresse IP vers un serveur DCHP « DCHP Server ou DSe en anglais » (108). Les requêtes transitent par un relai DHCP (106) « DHCP Relay ou DRe en anglais ».

En environnement IPv6, le routeur mobile (104) demande au DHCP Server (108) via le DHCP relai (106) un ensemble d'adresses ou préfixe IPv6 selon l'extension de délégation de préfixe du protocole DHCPv6-PD. Ce préfixe est utilisé par les LFNs du réseau mobile (102) pour communiquer avec des ordinateurs distants ou Noeuds Correspondants « Corresponding Nodes ou CN en anglais » (110). Un noeud correspondant peut être un serveur d'applications, tel qu'un serveur Web situé à un endroit arbitraire sur Internet (112).

La Figure 2 montre une représentation topologique des entités intervenant dans la mise en oeuvre de la présente invention dans l'environnement PMIPv6 selon le protocole DHCP.

La spécification PMIPv6 définit l'utilisation de deux types d'entités localisées dans le réseau pour la gestion de la mobilité: le point d'attachement « Local Mobility Anchor ou LMA en anglais» (210) et la passerelle routeur mobile « Mobile Access Gateway ou MAG en anglais» (206-1, 206-2).

Le LMA (210) peut être localisé sur un serveur central qui permet d'accéder par exemple à un réseau Internet. Le serveur central peut être un serveur DSe « DHCP Server en anglais » (208) opérant sous le protocole DHCP.

Le MAG (206-1, 206-2) est localisé sur un routeur IP d'accès du réseau PMIP qui peut être un relai DHCP (DRe1, DRe2).

Le MAG (206-1) et le LMA (210) établissent des tunnels de communication IP bidirectionnelle entre eux afin de faire transiter les communications des noeuds.

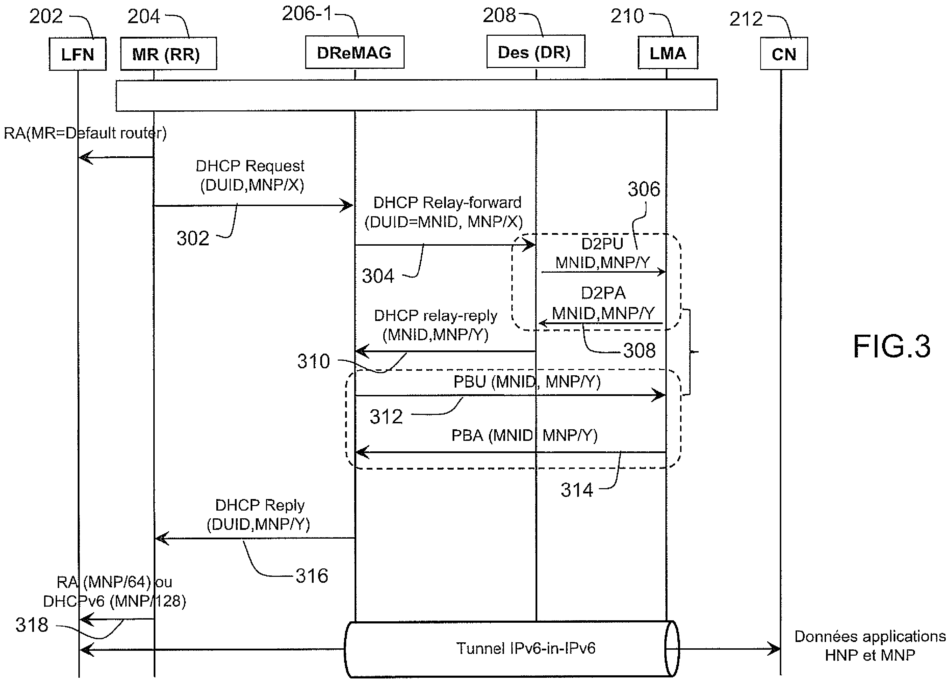

La Figure 3 montre sous un schéma de type flot de données, une procédure d'attachement d'un routeur mobile à un réseau PMIP selon les principes de la présente invention.

Dans une étape initiale non montrée sur la figure 3, le routeur mobile obtient un préfixe de réseau initial « Home Network Prefix ou HNP en anglais » selon une procédure classique PMIP. Après avoir formé une adresse IP globale pour une utilisation pour lui-même, le routeur mobile (MR) exécute une procédure de découverte DHCP typique avec envoi et réception de messages bien connus « DHCP Solicit et DHCP Advertise en anglais ».

A l'étape (302) le routeur mobile (204) envoie une requête DHCP « DHCP Request en anglais » pour obtenir un préfixe de réseau mobile « Mobile Network Prefix ou MNP en anglais » de taille 'X' (MNP/X). La requête DHCP contient un paramètre « DHCP Unique Identifier ou DUID en anglais » pour identifier le routeur demandeur de manière unique.

La requête est reçue par le relai DHCP (206-1) qui assigne à l'identifiant DUID une valeur d'identifiant de réseau mobile « Mobile Network Identifier ou MNID en anglais ». La valeur MNID attribuée est celle créée lors de l'exécution de la procédure initiale de PMIP (non montré sur la figure 3).

A l'étape (304), la requête DHCP contenant l'identifiant MNID est poussée par le relai vers le serveur DCHP (208) sous la forme d'une requête « DHCP Relay-Forward ». À la réception de la requête, le serveur DSe alloue un préfixe MNP de taille 'Y' (MNP/Y) pour le routeur mobile (MR). La taille 'Y' du préfixe alloué peut être égale ou différente de la taille demandée 'X' par le routeur selon les ressources disponibles.

A l'étape (310), le serveur DHCP envoie un message DHCP de retour « DHCP Relay-Reply en anglais » au MAG (206-1).

Dans une première implémentation de l'invention, avant que le serveur DSe envoie le message de retour « DHCP Relay-Reply », il informe dans une étape (306) le LMA de la nouvelle allocation de préfixe (MNP/Y). Un message de signalisation DHCP vers PMIP « DHCP to PMIP Update ou D2PU en anglais » est créé qui comprend l'identifiant de réseau mobile alloué (MNID). Optionnellement, le message D2PU peut contenir l'adresse IP globale du routeur mobile et le préfixe de routeur mobile (MNP) alloué. A l'étape (308), le serveur reçoit du LMA (210) l'acquittement de ce message, sous la forme d'un message de signalisation « DHCP to PMIP Acknowledgement ou D2PA en anglais ».

Dans une variante d'implémentation de l'invention, après l'étape 310 où le serveur DHCP (208) envoie un message DHCP de retour (sans avoir effectué les étapes 306 et 308 de la variante précédente), le MAG se charge de notifier le MNP au LMA. A réception du message « DHCP Relay-Reply » provenant de DSe et contenant le MNP alloué pour le Routeur Mobile, le MAG créé à l'étape (312) un message de signalisation PBU contenant l'identifiant de réseau mobile alloué (MNID) et la nouvelle allocation de préfixe (MNP/Y). Le message PBU est envoyé au LMA (210). Le LMA à l'étape (314) retourne un message de signalisation PBA au MAG.

Après l'étape (314), le MAG (206-1) envoie au routeur mobile (204) une réponse DHCP « DHCP Reply » contenant le préfixe de réseau mobile alloué (MNP/Y).

Le routeur mobile (204) dans une étape ultérieure (318) annonce dans un message de « Routeur Advertisement (RA) en anglais » un préfixe dérivé du MNP pour que le LFN (202) puisse former une adresse,pour permettre la communication bidirectionnelle avec un noeud correspondant (212).

Alternativement, le routeur mobile (204) peut utiliser des messages DHCPv6 (et non pas Router Advertisement RA) pour offrir une adresse au LFN, adresse formée par le routeur mobile à partir du MNP ou d'un préfixe dérivé de ce MNP. Un préfixe P dérivé d'un préfixe MNP/Y est tout préfixe dont la longueur est comprise entre Y et la longueur totale d'adresse. À titre d'exemple, un préfixe 2001:db8:1:1::/X est dérivé du préfixe 2001:db8:1::/48 si et seulement si X est supérieur à 48, par exemple est égal à 56.

Lors d'un déplacement du réseau mobile, une procédure de basculement de l'attachement du routeur mobile à premier MAG1 vers un MAG2 voisin est exécutée selon les principes de l'invention décrits plus haut. Le basculement est effectué initialement selon le protocole PMIP pour les préfixes 'réseau mère' (HNP) et 'réseau mobile' (MNP). Dans une étape suivante, le routeur mobile envoie au nouveau MAG2 une requête DHCP de confirmation « DHCP confirm en anglais » qui contient l'identifiant (DUID) et le préfixe de réseau mobile alloué précédemment (MNP/Y).

À la réception du message « DHCP Confirm » le MAG2 insère une entrée dans une table de routage (R) contenant le MNP et l'adresse source de ce message. De plus, le MAG2 insère des entrées dans une table de tunnels (T) et une table de routage inverse (SR) relatives au MNP. Ensuite il transmet le DHCP Confirm au DSe en « DHCP Relay-Forward». La procédure exécute ensuite de manière similaire les étapes 304 à 316 de la figure 3 à partir du nouveau MAG2 selon la variante d'implémentation.

Dans une première variante d'implémentation de l'invention sur le serveur DHCP DSe, à la réception du message « DHCP Relay-Forward», le DSe construit et envoie un message (D2PU) au LMA l'informant de l'adresse du nouveau MAG2, du MNP du routeur mobile. Le message (D2PU) contient aussi le HNP. A réception, le LMA met à jour ses tables d'association (B), de paramètres de tunnels (T) et de routage (R) par rapport au MNP, au HNP et au nouveau MAG2. Le LMA envoie ensuite le message D2PA au DSe. Le DSe crée le message « Relay-Reply » pour le MR, quand le D2PA est reçu. Quand le DRe reçoit ce message, il met à jour ses tables (B) et (R) par rapport au HNP. De cette manière les chemins IP complets entre CN et LFN sont mis à jour après un basculement du MR, et LFN continue à utiliser le MNP initialement assigné par la procédure « DHCP Prefix Delegation ».

Dans une seconde variante d'implémentation de l'invention sur le MAG, à réception du message « DHCP Confirm » par le MAG2, ce dernier insère des entrées relatives au MNP dans les tables (T) et (SR) et transmet le message « DHCP Relay-Forward » au DSe. Le MAG2 attend la réception du message « DHCP Relay-Reply » du DSe l'informant du succès de l'opération de maintien du MNP au DHCP Server. Il est à indiquer que les messages D2PU et D2PA ne sont pas utilisés dans cette seconde variante d'implémentation. Ensuite, le MAG2 envoie au LMA un message (PBU) contenant les valeurs du (MNID) et du (MNP/Y). À la réception du message (PBU), le LMA met à jour ses tables (B), (T) et (R) relatives au HNP et MNP. Puis le LMA envoie un message (PBA) au MAG2. À la réception du message (PBA), le MAG2 met à jours ses entrées dans ses tables (T) et (SR) relatives au HNP. Puis, le MAG2 transmet un message « DHCP Relay-Reply » au routeur mobile (MR) ainsi permettant d'établir la communication IP bidirectionnelle entre les LFNs et les noeuds correspondants CNs.

Lors d'un détachement du domaine PMIPv6 d'un routeur mobile, une procédure de détachement est exécutée selon les principes de l'invention. Le routeur mobile (204) envoie au serveur DHCP via le MAG une requête DHCP de détachement « DHCP release en anglais ». La requête contient l'identifiant (DUID) et le préfixe de réseau mobile alloué précédemment (MNP/Y). La procédure exécute ensuite de manière similaire les étapes 304 à 316 de la figure 3.

Dans une première variante d'implémentation de l'invention sur le serveur DHCP, à la réception du message « DHCP Relay-Forward», le DSe transmet au LMA un message (D2PU). À la réception du message (D2PU), le (LMA) efface ses entrées dans les tables (B), (R) et (T) relatives au HNP et MNP, puis envoie un message (D2PA) au DSe. À réception du message (D2PA), le DSe efface les données relatives à l'allocation du MNP, et envoie un message « DHCP Relay-Reply » au DRe. Le DRe efface ses entrées relatives au HNP et MNP et envoie le message « DHCP Reply » au routeur mobile.

Dans une seconde variante d'implémentation de l'invention sur le MAG, l'ordre d'effacement des données est cadencé par les messages (PBU) et (PBA) de manière similaire aux étapes 312 et 314.

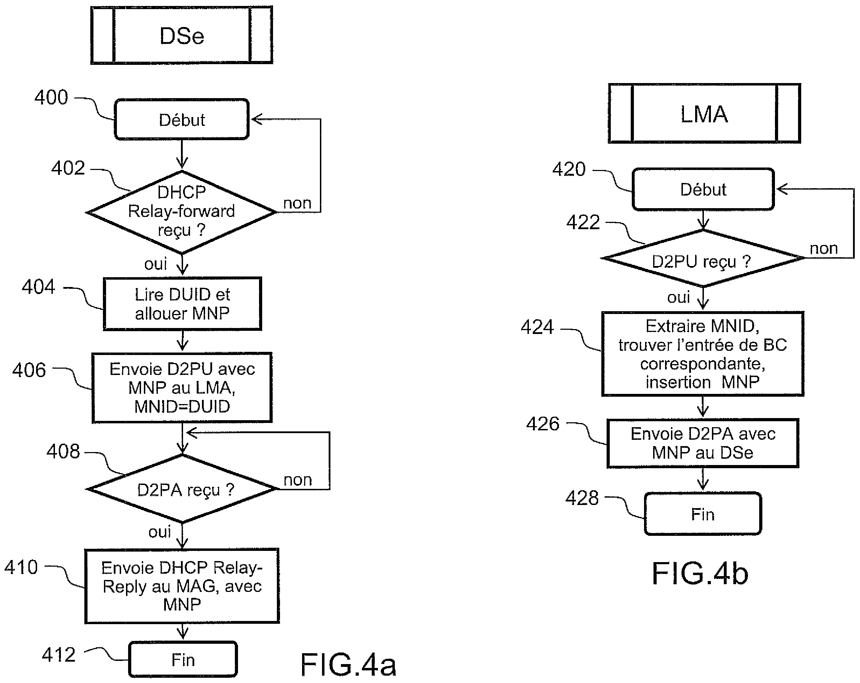

Les Figures 4a et 4b montrent sous un schéma de type pseudocode, les procédures exécutées respectivement sur les entités DSe et LMA dans une première variante d'implémentation de l'invention.

La procédure 400 de la figure 4a s'exécute sur le serveur DCHP. Le DSe attend en 402 de recevoir un message « DHCP Relay-Forward » correspondant à une demande émise par un routeur mobile (MR).

A l'étape 404, le DSe extrait l'identifiant (DUID) de ce message. Comme décrit plus haut, l'identifiant (DUID) a été précédemment initialisé par le MAG à la valeur de l'identifiant de réseau mobile (MNID).

A l'étape 406, le DSe alloue un MNP et l'envoie au LMA à l'intérieur d'un message (D2PU) qui contient aussi le (MNID).

A l'étape 408, le DSe attend de recevoir un message (D2PA) provenant du LMA.

A la réception de ce message (D2PA), à l'étape 410 le DSe envoie un message « DHCP Relay-Reply » au MAG et la procédure s'arrête (412).

La procédure 420 de la figure 4b s'exécute sur le LMA. Le LMA attend à l'étape 422 de recevoir un message (D2PU).

À la réception du message (D2PU), à l'étape 424, le LMA extrait le (MNID) et le (MNP/Y) contenus dans le message. Puis comme précédemment expliqué, le LMA utilise le (MNID) pour trouver dans sa table d'association (B) le (HNP) et l'adresse du MAG (MAGe@). Le LMA utilise le (HNP) pour chercher dans sa table de routage (R) et trouver l'entrée correspondante dans la liste des paramètres de tunnels (T). Le LMA insère une entrée dans (B) contenant le (MNID), le (MNP) et l'adresse (MAGe@). L'adresse MAGe@ est contenue dans le champ adresse source du paquet (D2PU). LMA insère une entrée dans (R) contenant le (MNP) qui pointe vers une entrée dans la table de tunnels (T). Cette entrée dans (T) est créée précédemment lors d'attribution de (HNP) au (MR). Pour identifier cette entrée, le MAG cherche dans toutes ses entrées de (B) celle qui corresponde au (MNID), en extrait le (MAGe@) et l'utilise pour chercher une entrée dans (T). L'entrée dans (T) est utilisée dans (R) pour le MNP actif.

A l'étape 426, le LMA envoie le message (D2PA) au DSe contenant l'identifiant (MNID) et le (MNP/Y) et la procédure s'arrête (428).

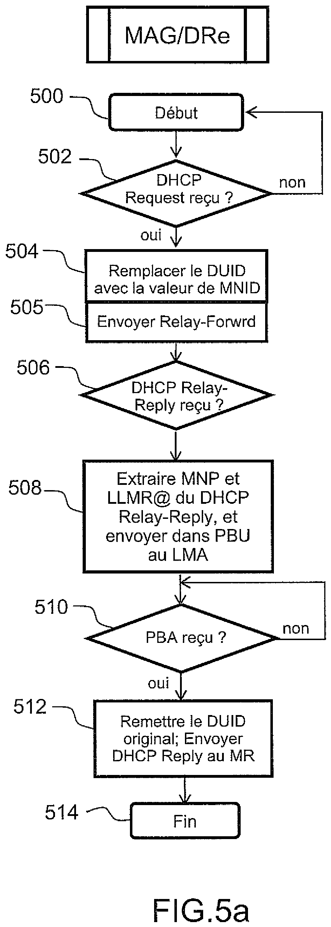

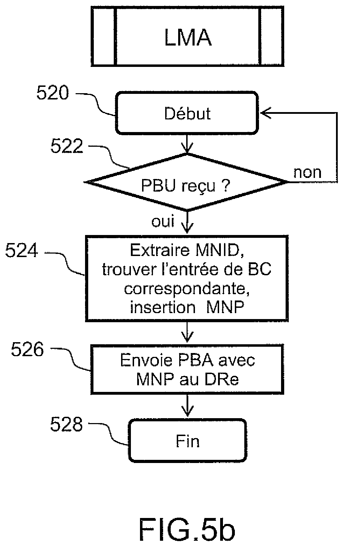

Les Figures 5a et 5b montrent sous un schéma de type pseudocode, les procédures exécutées respectivement sur les entités MAG/DRe et LMA dans une seconde variante d'implémentation de l'invention.

La procédure 500 de la figure 5a s'exécute sur le MAG où est associé le relai DHCP DRe. Le MAG attend en 502 de recevoir un message « DHCP Request» correspondant à une demande émise par un routeur mobile (MR).

A l'étape 504, il extrait l'identifiant (DUID) et lui attribue la valeur du (MNID) associé au MR. Puis il envoie le message « DHCP Relay-Forward ».

A l'étape 506, il attend un message de retour « DHCP Relay-Reply ».

A la réception de ce message, à l'étape 508 il extrait le (MNP) et l'adresse lien-locale (« link local en anglais ») du MR présente dans ce message (LLMR@). Puis il créé un message (PBU) et l'envoie au LMA.

A l'étape 510, le MAG attend de recevoir un message (PBA) émis par le LMA. Le message (PBA) émis par le LMA contient, entre autres, les options (MNID) et (MNP) formatées comme dans le message (PBU).

Le message (PBA) contient dans son en tête un champ supplémentaire pour communiquer le « Status » de l'exécution du message (PBU). Pour ce champ, les mêmes valeurs « Status » définies par PMIPv6 pour un HNP sont utilisées.

A l'étape 512, à la réception du message (PBA), le MAG va extraire l'identifiant (MNID) et l'utiliser pour trouver soit la (LLMR@) ou bien l'adresse de l'interface egress du MR (basée sur HNP). Cette recherche peut être réalisée dans les tables du « DHCP Relay » ou de PMIPv6. Le MAG utilise aussi le (MNID) pour trouver le (HNP) et l'entrée correspondante au (HNP) dans (T). Une entrée est insérée dans (R) contenant (MNP) et (LLMR@) ou bien l'adresse de l'interface egress du MR. Une entrée est aussi insérée dans (SR) contenant (MNP) et l'entrée correspondante au (HNP) dans (T). Le MAG envoie le message « DHCP Reply » et la procédure s'arrête (514).

La procédure 520 de la figure 5b s'exécute sur le LMA. Le LMA attend à l'étape 522 de recevoir un message (PBU).

À la réception du message (PBU), à l'étape 524, le LMA extrait le (MNID) et le (MNP/Y) contenus dans le message. Puis comme précédemment expliqué, le LMA utilise le (MNID) pour trouver dans sa table d'association (B) le (HNP) et l'adresse du MAG (MAGe@). Le LMA utilise le (HNP) pour chercher dans sa table de routage (R) et trouver l'entrée correspondante dans la liste des paramètres de tunnels (T). Le LMA insère une entrée dans (B) contenant le (MNID), le (MNP) et l'adresse (MAGe@). L'adresse MAGe@ est contenue dans le champ adresse source du paquet (D2PU). LMA insère une entrée dans (R) contenant le (MNP) qui pointe vers une entrée dans la table de tunnels (T). Cette entrée dans (T) est créée précédemment lors d'attribution de (HNP) au (MR). Pour identifier cette entrée, le MAG cherche dans toutes ses entrées de (B) celle qui corresponde au (MNID), en extrait le (MAGe@) et l'utilise pour chercher une entrée dans (T). L'entrée dans (T) est utilisée dans (R) pour le MNP actif.

A l'étape 526, le LMA envoie le message (PBA) au DRe contenant l'identifiant (MNID) et le (MNP/Y) et la procédure s'arrête (528).

Il est à noter qu'après l'exécution de l'une ou l'autre des routines (400, 420) ou (500, 520) selon la variante d'implémentation, toutes les entrées dans les tables de routages et d'associations sont inscrites pour permettre la transmission de paquets de données de bout en bout entre chaque LFN et son ou ses CNs avec lesquels il maintient des sessions IP.

Un avantage important de la méthode décrite est qu'elle permet l'utilisation de préfixes HNP et MNP complètement différents, n'ayant aucune séquence de bits en commun ancrée à gauche, d'aucune longueur. A titre d'exemple, un MNP pourra être « ffff::/16 » et un HNP pourra être « 0001::/15 », n'ayant aucune séquence de bits en commun ancrée à gauche, le premier bit étant 1 pour MNP et 0 pour HNP.

L'homme de l'art appréciera que des variations peuvent être apportées sur la méthode telle que décrite de manière préférentielle, tout en maintenant les principes de l'invention. Ainsi, il est possible de ne pas utiliser un relai DHCP et faire exécuter la routine 500 sur le MAG uniquement.

Une variante peut consister à co-localiser un DHCP Server avec le LMA ou les conserver distincts.

Une autre variante dans un réseau très étendu peut consister à modifier les comportements de chacun des MAG, LMA, DRe, et DSe, ou bien à ne modifier que certaines entités.

Dans une implémentation alternative où un serveur DHCP n'est pas déployé dans un réseau PMIP, le MAG va agir comme un proxy DHCP. Il écoute des messages DHCP émis par un routeur mobile (MR) et, à la réception de ces messages, il génère des messages PMIP (PBU) modifiés de manière à obtenir des (MNP) pour le (MR) au lieu de (HNP). Dans ce cas, le (MNP) est alloué par le LMA, et non par un DHCP Server. Cette variante est implémentable dans des réseaux d'accès Internet où l'allocation d'adresse se fait par d'autres moyens que DHCP, tel que Radius ou AAA.

La présente invention peut s'implémenter à partir d'éléments matériel et/ou logiciel. Elle peut être disponible en tant que produit programme d'ordinateur sur un support lisible par ordinateur.

Le support peut être électronique, magnétique, optique, électromagnétique ou être un support de diffusion de type infrarouge. De tells supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) and DVD).

## Revendications

1. Méthode pour gérer la mobilité d'un réseau mobile (102) dans un environnement Proxy Mobile Internet Protocol, PMIP, opérant sous le protocole Dynamic Host Configuration Protocol, DHCP, ledit réseau mobile comprenant un routeur mobile (204) en communication avec au moins un équipement utilisateur (202), la méthode comprenant les étapes suivantes:
- recevoir (302) un message (DHCP Request) de demande de préfixe de réseau mobile (MNP/X), le message contenant un identifiant DHCP unique pour identifier le routeur mobile demandeur (DUID) ;
- attribuer (504) une valeur d'identifiant mobile (MNID) à l'identifiant DHCP unique;
- générer (304) un message (DHCP Relay-Forward) de demande de préfixe de réseau mobile (MNP/X), le message contenant la valeur de l'identifiant mobile (MNID) attribuée ;
- recevoir (310) un message (DHCP Relay-Reply) de réponse contenant un préfixe de réseau mobile alloué (MNP/Y) et la valeur de l'identifiant mobile (MNID) ;
- restaurer (512) la valeur de l'identifiant DHCP unique; et
- transmettre (316) un message (DHCP Reply) de réponse, le message contenant l'identifiant DHCP unique du routeur mobile demandeur (DUID) et le préfixe de réseau mobile alloué (MNP/Y).

2. La méthode selon la revendication 1 dans laquelle le préfixe de réseau mobile demandé (MNP/X) et le préfixe de réseau mobile alloué (MNP/Y) sont de longueur différente.

3. La méthode selon la revendication 1 ou 2 comprenant après l'étape de génération d'un message de demande de préfixe de réseau mobile (MNP/X), les étapes de:
- générer (306) un message (D2PU) de mise à jour « DHCP/PMIP update » vers un point d'attachement (LMA) de l'environnement PMIP, ledit message contenant le préfixe de réseau mobile alloué (MNP/Y) et la valeur de l'identifiant mobile (MNID);
- mettre à jour (424) les tables de routage du point d'attachement par rapport au contenu dudit message D2PU; et
- générer (308) un message (D2PA) de confirmation de mise à jour « DHCP/PMIP Acknowledgement ».

4. La méthode selon la revendication 1 ou 2 comprenant après l'étape de réception d'un message de réponse, les étapes de:
- générer (312) un message (PBU) de mise à jour « Proxy Binding Update » vers un point d'attachement (LMA) de l'environnement PMIP, ledit message contenant le préfixe de réseau mobile alloué (MNP/Y) et la valeur de l'identifiant mobile (MNID);
- mettre à jour (524) les tables de routage du point d'attachement par rapport au contenu dudit message PBU; et
- générer (314) un message (PBA) de confirmation de mise à jour «Proxy Binding Acknowledgement ».

5. La méthode selon l'une quelconque des revendications 1 à 4 dans laquelle le message (DHCP Request) de demande de préfixe de réseau mobile (MNP/X) est un message de confirmation (DHCP Confirm) de préfixe de réseau mobile précédemment alloué (MNP/Y), la méthode comprenant après l'étape de réception les étapes de :
- attribuer une valeur d'identifiant mobile (MNID) à l'identifiant DHCP unique;
- générer un message (DHCP Relay-Forward) de confirmation de préfixe de réseau mobile (MNP/Y), le message contenant la valeur de l'identifiant mobile (MNID) attribuée ;
- recevoir un message (DHCP Relay-Reply) de réponse de confirmation contenant le préfixe de réseau mobile (MNP/Y) et la valeur de l'identifiant mobile (MNID) ;
- restaurer la valeur de l'identifiant DHCP unique ; et
- transmettre un message (DHCP Reply) de réponse, le message contenant l'identifiant DHCP unique de routeur mobile demandeur (DUID) et le préfixe de réseau mobile alloué (MNP/Y).

6. La méthode selon l'une quelconque des revendications 1 à 4 dans laquelle le message (DHCP Request) de demande de préfixe de réseau mobile (MNP/X) est un message de détachement (DHCP Release) du réseau mobile.

7. La méthode selon l'une quelconque des revendications 1 à 6 dans laquelle l'environnement Proxy Mobile IP est un environnement PMIPv6.

8. La méthode selon l'une quelconque des revendications 1 à 7 dans laquelle le protocole DHCP est le protocole DHCPv6.

9. La méthode selon l'une quelconque des revendications 1 à 8 dans laquelle l'étape (304) génère un message (DHCP Relay-Forward) de demande de préfixe de réseau mobile (MNP/X) vers un serveur DHCP.

10. Un système pour gérer la mobilité d'un réseau mobile (102) dans un environnement Proxy Mobile Internet Protocol, PMIP, opérant sous le protocole Dynamic Host Configuration Protocol, DHCP, ledit réseau mobile comprenant un routeur mobile (204) en communication avec au moins un équipement utilisateur (202), le système comprenant des moyens pour mettre en oeuvre les étapes de la méthode selon l'une quelconque des revendications 1 à 9.

11. Le système selon la revendication 10 où ledit au moins un équipement utilisateur appartient au groupe des équipements tels qu'ordinateur portable, tablette PC, téléphone portable.

12. Le système selon la revendication 11 où le routeur mobile a un préfixe de réseau initial (HNP) différent du préfixe de réseau mobile alloué (MNP/Y).

13. Un produit programme d'ordinateur, ledit programme d'ordinateur comprenant des instructions de code permettant d'effectuer les étapes de la méthode selon l'une quelconque des revendications 1 à 9, lorsque ledit programme est exécuté sur un ordinateur.

## Patentansprüche

1. Verfahren zum Verwalten der Mobilität eines Mobilfunknetzes (102) in einer Proxy-Mobile-Internet-Protocol-(PMIP-)Umgebung, die durch das Protokoll Dynamic Host Configuration Protocol (DHCP) betrieben wird, wobei das Mobilfunknetz einen Mobil-Router (204) in Verbindung mit zumindest einem Benutzergerät (202) umfasst, wobei das Verfahren die folgenden Schritte umfasst:
- Empfangen (302) einer Nachricht (DHCP Request) zur Anforderung von einem Präfix des Mobilfunknetzes (MNP/X), wobei die Nachricht eine eindeutige DHCP-Identifizierung zum Identifizieren des anfordernden Mobil-Routers (DUID) enthält;
- Zuweisen (504) eines Identifizierungswerts (MNID) zur eindeutigen Identifizierung des DHCP;
- Erzeugen (304) einer Nachricht (DHCP Relay-Forward) zur Anforderung von einem Präfix des Mobilfunknetzes (MNP/X), wobei die Nachricht den zugeordneten Mobilidentifizierungswert (MNID) enthält;
- Empfangen (310) einer Antwortnachricht (DHCP Relay-Reply), die ein bereitgestelltes Präfix des Mobilfunknetzes (MNP/Y) und den Mobilidentifizierungswert (MNID) enthält;
- Wiederherstellen (512) des eindeutigen DHCP-Identifizierungswerts; und
- Senden (316) einer Antwortnachricht (DHCP Reply), wobei die Nachricht die eindeutige DHCP-Identifizierung des anfordernden Mobil-Routers (DUID) und das bereitgestellte Präfix des Mobilfunknetzes (MNP/Y) enthält.

2. Verfahren nach Anspruch 1, wobei das Präfix des anfordernden Mobilfunknetzes (MNP/X) und das bereitgestellte Präfix des Mobilfunknetzes (MNP/Y) von unterschiedlicher Länge sind.

3. Verfahren nach Anspruch 1 oder 2, das nach dem Schritt des Erzeugens einer Nachricht zur Anforderung von einem Präfix des Mobilfunknetzes (MNP/X) die folgenden Schritte umfasst:
- Erzeugen (306) einer Nachricht (D2PU) zur Aktualisierung "DHCP/PMIP update" auf Grundlage eines Verknüpfungspunktes (LMA) der PMIP-Umgebung, wobei die Nachricht das bereitgestellte Präfix des Mobilfunknetzes (MNP/Y) und den Mobilidentifizierungswert (MNID) umfasst;
- Aktualisieren (424) der Routingtabellen des Verknüpfungspunktes in Bezug auf den Inhalt der D2PU-Nachricht; und
- Erzeugen (308) einer Nachricht (D2PA) zur Bestätigung der Aktualisierung "DHCP/PMIP Acknowledgement".

4. Verfahren nach Anspruch 1 oder 2, das nach dem Schritt des Empfangens einer Antwortnachricht die folgenden Schritte umfasst:
- Erzeugen (312) einer Nachricht (PBU) zur Aktualisierung "Proxy Binding Update" auf Grundlage eines Verknüpfungspunktes (LMA) der PMIP-Umgebung, wobei die Nachricht das bereitgestellte Präfix des Mobilfunknetzes (MNP/Y) und den Mobilidentifizierungswert (MNID) umfasst;
- Aktualisierung (524) der Routingtabellen des Verknüpfungspunktes in Bezug auf den Inhalt der PBU-Nachricht; und
- Erzeugen (314) einer Nachricht (PBA) zur Bestätigung der Aktualisierung "Proxy Binding Acknowledgement".

5. Verfahren nach einem der Ansprüche 1 bis 4, wobei es sich bei der Nachricht (DHCP Request) zur Anforderung eines Präfixes des Mobilfunknetzes (MNP/X) um eine Nachricht zur Bestätigung (DHCP Confirm) des vorangehend bereitgestellten Präfixes des Mobilfunknetzes (MNP/Y) handelt, wobei das Verfahren nach dem Schritt des Empfangens die folgenden Schritte umfasst:
- Zuweisen eines Mobil-Identifizierungswerts (MNID) zum eindeutigen Identifizieren des DHCPs;
- Erzeugen einer Nachricht (DHCP Relay-Forward) zur Bestätigung von einem Präfix des Mobilfunknetzes (MNP/Y), wobei die Nachricht den zugeordneten Mobilidentifizierungswert (MNID) enthält;
- Empfangen einer Antwortnachricht (DHCP Relay-Reply) zur Bestätigung, die das Präfix des Mobilfunknetzes (MNP/Y) und den Mobilidentifizierungswert (MNID) enthält;
- Wiederherstellen des eindeutigen DHCP-Identifizierungswerts; und
- Senden einer Antwortnachricht (DHCP Reply), wobei die Nachricht die eindeutige DHCP-Identifizierung des anfordernden Mobil-Routers (DUID) und das bereitgestellte Präfix des Mobilfunknetzes (MNP/Y) enthält.

6. Verfahren nach einem der Ansprüche 1 bis 4, wobei es sich bei der Nachricht (DHCP Request) zur Anforderung eines Präfixes des Mobilfunknetzes (MNP/X) um eine Nachricht zur Trennung (DHCP Release) von dem Mobilfunknetz handelt.

7. Verfahren nach einem der Ansprüche 1 bis 6, wobei es sich bei der Proxy-Mobile-IP-Umgebung um eine PMIPv6-Umgebung handelt.

8. Verfahren nach einem der Ansprüche 1 bis 7, wobei es sich bei dem DHCP-Protokoll um das DHCPv6-Protokoll handelt.

9. Verfahren nach einem der Ansprüche 1 bis 8, wobei der Schritt (304) eine Nachricht (DHCP Relay-Forward) zur Anforderung eines Präfixes des Mobilfunknetzwerkes (MNP/X) über einen DHCP-Server umfasst.

10. System zum Verwalten der Mobilität eines Mobilfunknetzes (102) in einer Proxy-Mobile-Internet-Protocol-(PMIP-)Umgebung, die durch das Protokoll Dynamic Host Configuration Protocol (DHCP) betrieben wird, wobei das Mobilfunknetz einen Mobil-Router (204) in Verbindung mit zumindest einem Benutzergerät (202) umfasst, wobei das System Mittel zum Umsetzen der Schritte des Verfahrens nach einem der Ansprüche 1 bis 9 umfasst.

11. System nach Anspruch 10, wobei zumindest ein Benutzergerät zu der Gruppe bestehend aus einem Laptop, einem Tablet-PC und einem Mobiltelefon gehört.

12. System nach Anspruch 11, wobei der Mobil-Router ein Präfix des Anfangsnetzes (HNP) aufweist, das sich von dem bereitgestellten Präfix des Mobilfunknetzes (MNP/Y) unterscheidet.

13. Computerprogrammprodukt, wobei das Computerprogramm Code-Anweisungen umfasst, die es ermöglichen, die Schritte des Verfahrens nach einem der Ansprüche 1 bis 9 durchzuführen, wobei das Programm auf einem Computer ausgeführt wird.

## Claims

1. A method for managing the mobility of a mobile network (102) in a Proxy Mobile Internet Protocol, PMIP, environment operating under the Dynamic Host Configuration Protocol, DHCP, protocol, said mobile network comprising a mobile router (204) in communication with at least one user device (202), the method comprising the following steps:
- receiving (302) a message (DHCP Request) requesting a mobile network prefix (MNP/X), the message containing a unique DHCP identifier to identify the requesting mobile router (DUID);
- assigning (504) a mobile identifier value (MNID) to the unique DHCP identifier;
- generating (304) a message (DHCP Relay-Forward) requesting a mobile network prefix (MNP/X), the message containing the assigned value of the mobile identifier (MNID);
- receiving (310) a response message (DHCP Relay-Reply) containing an allocated mobile network prefix (MNP/Y) and the value of the mobile identifier (MNID);
- restoring (512) the value of the unique DHCP identifier; and
- transmitting (316) a response message (DHCP Reply), the message containing the unique DHCP identifier of the requesting mobile router (DUID) and the allocated mobile network prefix (MNP/Y).

2. The method according to Claim 1, wherein the requested mobile network prefix (MNP/X) and the allocated mobile network prefix (MNP/Y) are of different lengths.

3. The method according to Claim 1 or 2, comprising, after the step of generating a message requesting a mobile network prefix (MNP/X), the steps of:
- generating (306) an update message (D2PU) "DHCP/PMIP update" toward a point of attachment (LMA) of the PMIP environment, said message containing the allocated mobile network prefix (MNP/Y) and the value of the mobile identifier (MNID);
- updating (424) the routing tables for the point of attachment with respect to the content of said message D2PU; and
- generating (308) an update confirmation message (D2PA) "DHCP/PMIP Acknowledgement".

4. The method according to Claim 1 or 2, comprising, after the step of receiving a response message, the steps of:
- generating (312) an update message (PBU) "Proxy Binding Update" toward a point of attachment (LMA) of the PMIP environment, said message containing the allocated mobile network prefix (MNP/Y) and the value of the mobile identifier (MNID);
- updating (524) the routing tables for the point of attachment with respect to the content of said message PBU; and
- generating (314) an update confirmation message (PBA) "Proxy Binding Acknowledgement".

5. The method according to any of Claims 1 to 4, wherein the message (DHCP Request) requesting a mobile network prefix (MNP/X) is a confirmation message (DHCP Confirm) of a previously allocated mobile network prefix (MNP/Y), the method comprising, after the reception step, the steps of:
- assigning a mobile identifier value (MNID) to the unique DHCP identifier;
- generating a message (DHCP Relay-Forward) of confirmation of the mobile network prefix (MNP/Y), the message containing the assigned value of the mobile identifier (MNID);
- receiving a confirmation response message (DHCP Relay-Reply) containing the mobile network prefix (MNP/Y) and the value of the mobile identifier (MNID);
- restoring the value of the unique DHCP identifier; and
- transmitting a response message (DHCP Reply), the message containing the unique DHCP identifier of the requesting mobile router (DUID) and the allocated mobile network prefix (MNP/Y).

6. The method according to any of Claims 1 to 4, wherein the message (DHCP Request) requesting a mobile network prefix (MNP/X) is a message of detachment (DHCP Release) of the mobile network.

7. The method according to any of Claims 1 to 6, wherein the Proxy Mobile IP environment is a PMIPv6 environment.

8. The method according to any of Claims 1 to 7, wherein the DHCP protocol is the DHCPv6 protocol.

9. The method according to any of Claims 1 to 8, wherein the step (304) generates a message (DHCP Relay-Forward) requesting a mobile network prefix (MNP/X) toward a DHCP server.

10. A system for managing the mobility of a mobile network (102) in a Proxy Mobile Internet Protocol, PMIP, environment operating under the Dynamic Host Configuration Protocol, DHCP, protocol, said mobile network comprising a mobile router (204) in communication with at least one user device (202), the system comprising means for implementing the steps of the method according to any of Claims 1 to 9.

11. The system according to Claim 10, where said at least one user device belongs to the group of devices such as a laptop computer, tablet PC, mobile telephone.

12. The system according to Claim 11, where the mobile router has an initial network prefix (HNP) different from the allocated mobile network prefix (MNP/Y).

13. A computer programme product, said computer programme comprising code instructions making it possible to perform the steps of the method according to any of Claims 1 to 9, when said programme is executed on a computer.
